# EUROPÄISCHE PATENTSCHRIFT

(11) **EP 1 849 956 B1**
(45) Veröffentlichungstag und Bekanntmachung des Hinweises auf die Patenterteilung: **06.08.2008**
(21) Anmeldenummer: 06008685.7
(22) Anmeldetag: 26.04.2006
(51) Int. Cl.: E21B 17/046, F16L 37/14

(54) **Rohrkupplung für Rohrelemente**
Pipe coupling for pipe elements
Raccord de tuyau pour des éléments de tuyau

(43) Veröffentlichungstag der Anmeldung: 31.10.2007
(73) Patentinhaber: BAUER Maschinen GmbH, 86529 Schrobenhausen (DE)
(72) Erfinder: Stötzer, Erwin, 86551 Aichach (DE)
(74) Vertreter: Wunderlich, Rainer

(56) Entgegenhaltungen:
- DE-C1- 19 527 990
- DE-U1- 9 001 766
- GB-A- 1 275 443
- US-A- 2 075 483
- US-A- 4 697 947

## Beschreibung

Die Erfindung betrifft eine Rohrkupplung für Rohrelemente, wie sie beispielsweise aus der US-A-2 075 483 bekannt ist..

Es ist bekannt, Rohrelemente gleichzeitig zur Übertragung von Kräften, insbesondere von Drehmomenten, und zur Durchleitung von Fluiden einzusetzen. Eine solche Vorgehensweise kann beispielsweise bei Mischeinrichtungen vorteilhaft sein, bei denen eine Hohlwelle zum einen zum Einleiten von Fluiden in einen Reaktionsraum dient und zum anderen Elemente zum Agitieren des Reaktionsraumes trägt.

Zum Verbinden mehrerer derartiger Rohre sind Schraubkupplungen bekannt, wobei gegebenenfalls radiale Bolzen zur Sicherung der Schraubkupplungen vorgesehen sein können.

Bei der Verwendung aggressiver Fluide und/oder bei aggressiven Reaktionsbedingungen kann jedoch die Zuverlässigkeit solcher Schraubverbindungen leiden, insbesondere dann, wenn Korrosion und/oder Ablagerungen zu einer geometrischen Veränderung der Schraubgewinde führen. Dies kann zur Folge haben, dass die Rohrkupplung nur unter großem Aufwand lösbar ist und die Rohrelemente nur bedingt ausgewechselt werden können.

Aufgabe der Erfindung ist es, eine lösbare, Kräfte übertragende Rohrkupplung mit besonders hoher Zuverlässigkeit anzugeben.

Die Aufgabe wird erfindungsgemäß durch eine Rohrkupplung mit den Merkmalen des Anspruchs 1 gelöst. Bevorzugte Ausführungsbeispiele sind in den abhängigen Ansprüchen angegeben.

Die Erfindung liegt in einer Rohrkupplung für Rohrelemente mit einer Muffe mit einem Anschlussbereich für ein erstes Rohrelement, einem in die Muffe axial einschiebbaren Stecker mit einem Anschlussbereich für ein zweites Rohrelement, einem Verbindungsbereich für eine drehfeste Verbindung mit zumindest einem an der Muffe und/oder dem Stecker angeordneten Axialsteg und zumindest einer an dem Stecker beziehungsweise der Muffe angeordneten korrespondierenden Axialnut, einem Sicherungsbereich zur axialen Lagesicherung mit einer an der Muffe ausgebildeten ersten Ringnut und einer korrespondierenden zweiten Ringnut, die an dem Stecker ausgebildet ist, wobei mindestens ein Sperrelement zum Herstellen einer Formschlussverbindung zwischen der Muffe und dem Stecker über zumindest eine Einführöffnung in der Muffe in die beiden Ringnuten einführbar ist, und einer Vielzahl von gleichmäßig zueinander beabstandeten Radialbohrungen in der Ringnut des Steckers zur Aufnahme eines Sicherungsbolzens zur Lagesicherung des Sperrelementes.

Ein erster Grundgedanke der Erfindung kann in einer Trennung der Mittel zur Drehmomentübertragung und der Mittel zur axialen Lagesicherung und zur Übertragung axialer Zugkräfte gesehen werden. Zur Drehmomentübertragung ist in einem ersten Axialbereich von Muffe und Stecker, dem Verbindungsbereich, eine Keilwellenverzahnung mit zumindest einer axial verlaufenden Nut vorgesehen. Um eine Axialbewegung des Steckers in der Muffe und somit ein Auskuppeln des Verbindungsbereiches zu verhindern, ist darüber hinaus erfindungsgemäß ein Sicherungsbereich zur axialen Lagesicherung vorgesehen. In diesem Sicherungsbereich sind an der Muffe und dem Stecker Ringnuten vorgesehen, die sich bei eingeschobenem Stecker gegenüberliegen. Zum Herstellen der axialen Sicherung kann in die beiden Ringnuten ein Sperrelement eingeschoben werden, wodurch ein Formschluss zwischen Muffe und Stecker hergestellt wird.

Zum Einführen des Sperrelementes in die Ringnuten ist nach einem weiteren grundlegenden Gedanken der Erfindung an der Muffe zumindest eine Einführöffnung vorgesehen. Diese Einführöffnung ist erfindungsgemäß außenseitig an der Muffe, insbesondere in einem Mantelbereich der Muffe vorgesehen, so dass ein einfaches Einführen und Entnehmen zum Verbinden und Lösen der Rohrkupplung von außen möglich ist.

Gemäß einem weiteren Aspekt der Erfindung sind in der Ringnut des Steckers Radialbohrungen zur Aufnahme eines Sicherungsbolzens für das Sperrelement vorgesehen. Durch Einführen eines Bolzens in die Radialbohrungen kann eine Bewegung des Sperrelementes in Umfangsrichtung der Ringnut eingeschränkt werden und insbesondere verhindert werden, dass das Sperrelement in unerwünschter Weise aus der Einführöffnung heraus fällt und/oder in einen Bereich der Ringnuten gelangt, in dem es durch die Einführöffnung nicht mehr zugänglich ist. Dabei ist erfindungsgemäß eine Vielzahl von gleichmäßig zueinander beabstandeten Radialbohrungen vorgesehen, was eine besonders zuverlässige Sicherung des Sperrelementes ermöglicht. Die Anordnung mehrerer gleichmäßig zueinander beabstandeter Radialbohrungen ist insbesondere dann vorteilhaft, wenn der Verbindungsbereich eine Kupplung bei mehreren unterschiedlichen, gleichmäßig zueinander beabstandeten Winkelpositionen zulässt.

Durch die axiale Trennung von Verbindungsbereich und Sicherungsbereich wird die Anfälligkeit gegenüber geometrischen Veränderungen, beispielsweise durch Korrosion oder Ablagerungen, verringert. Darüber hinaus erlaubt die räumliche Trennung auch eine besonders zuverlässige Abdichtung des Rohrinneren gegenüber dem Rohräußeren.

Im Hinblick auf die Zuverlässigkeit und auf den Fertigungsaufwand ist es besonders vorteilhaft, dass der Verbindungsbereich für die drehfeste Verbindung an der Muffe zwischen dem Sicherungsbereich zur axialen Lagesicherung und dem Anschlussbereich für das Rohrelement angeordnet ist. Demgemäß ist der Verbindungsbereich am korrespondierenden Stecker axial näher an der Steckerspitze angeordnet als der Sicherungsbereich zur axialen Lagesicherung. Eine solche Anordnung erlaubt bei geringem Aufwand eine besonders zuverlässige Abdichtung, insbesondere zwischen dem Kupplungsinneren und dem Sicherungsbereich zur axialen Lagesicherung, der über die Einführöffnung mit der Umgebung in Verbindung steht.

Die Zuverlässigkeit der erfindungsgemäßen Rohrkupplung kann weiter dadurch erhöht werden, dass zumindest eine Ringdichtung axial zwischen dem Sicherungsbereich und dem Verbindungsbereich angeordnet wird. Alternativ oder zusätzlich kann vorgesehen sein, dass zumindest eine Ringdichtung auf der dem Sicherungsbereich axial abgewandten Seite des Verbindungsbereichs angeordnet ist. Vorzugsweise ist die zwischen Sicherungsbereich und Verbindungsbereich angeordnete Ringdichtung durchmessergrößer als die Ringdichtung, die auf der dem Sicherungsbereich abgewandten Seite des Verbindungsbereiches angeordnet ist.

Eine konstruktiv besonders einfache und zugleich zuverlässige axiale Lagesicherung kann dadurch erreicht werden, dass das Sperrelement als gebogener, etwa quaderförmiger Keil ausgebildet ist. Ein solcher Keil kann besonders einfach durch die Einführöffnung in die Ringnuten eingeführt und wieder entnommen werden. Vorzugsweise wird zur axialen Sicherung zumindest ein Sperrelementepaar verwendet, wobei die beiden Sperrelemente des Sperrelementepaares auf entgegengesetzten Seiten der Einführöffnung in die Ringnuten eingeschoben sind. Geeigneterweise wird der Sicherungsbolzen mittig zwischen den beiden Sperrelementen angeordnet, so dass dieser gleichzeitig beide Sperrelemente eines Sperrelementepaares sichern kann.

Weiterhin ist es nach der Erfindung vorteilhaft, dass das Sperrelement einen radial nach außen vorstehenden Anschlag aufweist. Insbesondere kann der Anschlag so ausgebildet sein, dass er bei eingeschobenem Sperrelement an der Wandung der Einführöffnung anschlägt. Hierdurch kann verhindert werden, dass das Sperrelement beim Einschieben zu weit in die Ringnuten hineinrutscht und durch die Einführöffnung nur noch bedingt zugänglich ist.

Besonders vorteilhaft ist es ferner, dass das Sperrelement stirnseitig eine zum Stecker gerichtete, das heißt insbesondere radial nach innen gerichtete, Abschrägung aufweist. Eine solche Abschrägung ermöglicht es, das Sperrelement schräg durch die Einführöffnung einzuschieben, so dass Sperrelemente mit verglichen mit der Einführöffnung größeren Abmessungen verwendet werden können.

Die Fertigungskosten der erfindungsgemäßen Rohrkupplung können weiter dadurch verringert werden, dass die Muffe ein erstes Hülsenelement aufweist, an dem der Verbindungsbereich ausgebildet ist, sowie ein stirnseitig hieran angeordnetes zweites Hülsenelement, an dem insbesondere der Anschlussbereich für das erste Rohrelement vorgesehen ist. Die beiden Hülsenelemente können kraft-, form- oder stoffschlüssig verbunden sein. Bei einer derartigen Ausführungsform kann die Keilverzahnung im Verbindungsbereich in besonders einfacher Weise durch axiales Stoßen erstellt werden ohne dass das erst anschließend befestigte zweite Hülsenelement diesen Fertigungsvorgang behindert. Insbesondere kann das zweite Hülsenelement verglichen mit dem ersten Hülsenelement einen kleineren Innendurchmesser aufweisen.

Die erfindungsgemäße Rohrkupplung kann bei verschiedensten Anwendungen zum Einsatz kommen, bei denen über ein Rohr gleichzeitig Kräfte und Fluide übertragen werden sollen. So können die Rohrelemente beispielsweise zum gleichzeitigen Einleiten eines Stoffes in einen Arbeitsbereich und Durchmischen des Stoffes mit einem anderen Stoff in diesem Arbeitsbereich dienen. Insbesondere können die Rohrelemente als Bohrrohre für das Erd- und Gesteinsbohren oder Rohre zum Einleiten von Baustoffen, insbesondere von Suspensionen, in den Erdboden vorgesehen sein. Die Rohrelemente sind zu einem Bohrgestänge zusamensetzbar.

Die Erfindung wird nachfolgend anhand bevorzugter Ausführungsbeispiele näher erläutert, die schematisch in den Figuren dargestellt sind. In den Figuren zeigen:
- Fig. 1: eine perspektivische Ansicht einer erfindungsgemäßen Rohrkupplung in Explosionsdarstellung;
- Fig. 2: eine Seitenansicht der Rohrkupplung aus Fig. 1 in Explosionsdarstellung;
- Fig. 3: eine längsgeschnittene Ansicht der Rohrkupplung aus Fig. 1 in Explosionsdarstellung; und
- Fig. 4: eine perspektivische Ansicht eines Sperrelementes zur Verwendung in einer erfindungsgemäßen Rohrkupplung.

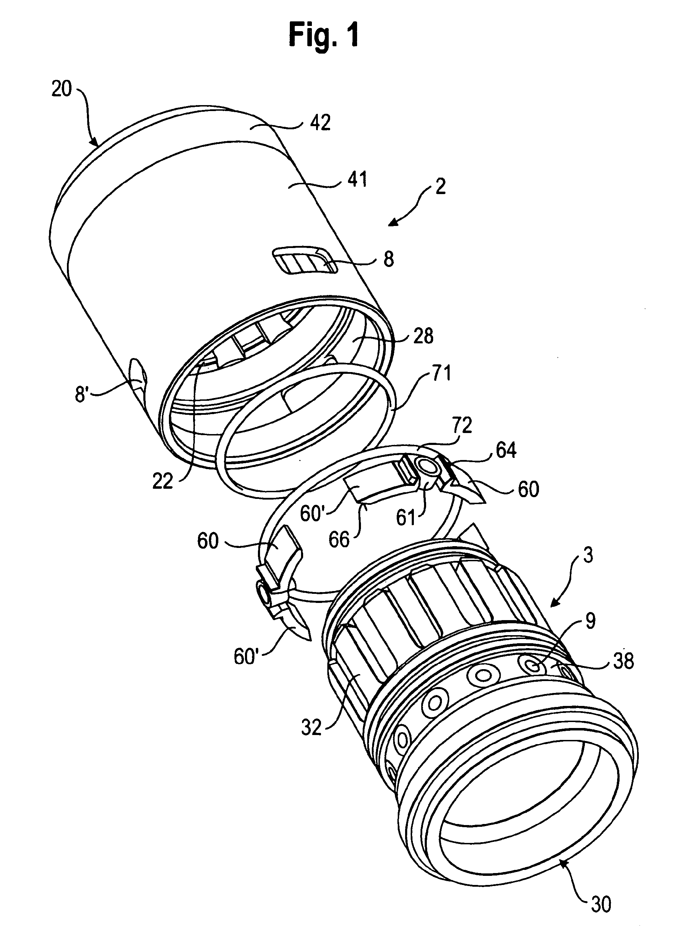

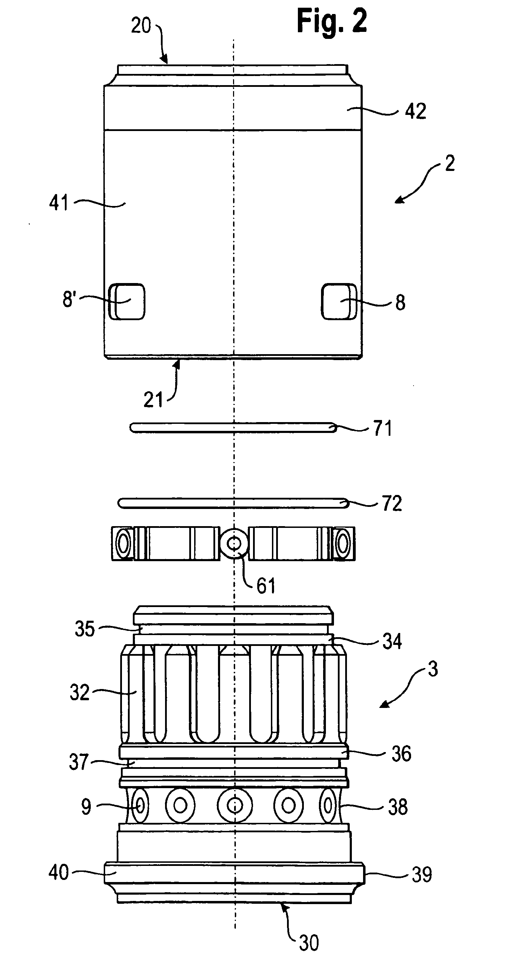

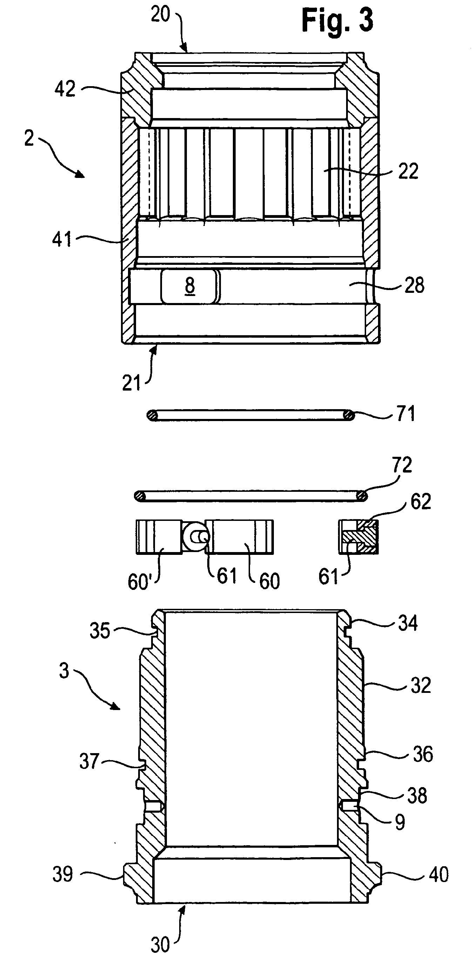

Ein Ausführungsbeispiel einer erfindungsgemäßen Rohrkupplung ist in den Figuren 1 bis 3 in verschiedener Ansicht dargestellt. Die Rohrkupplung weist eine zylindrische Muffe 2 auf, an der stirnseitig ein Anschlussbereich 20 für ein nicht dargestelltes erstes Rohrelement vorgesehen ist. Die Rohrkupplung weist ferner einen hülsenartigen Stecker 3 auf, an dem auf der gegenüberliegenden Stirnseite ein Anschlussbereich 30 für ein, ebenfalls nicht dargestelltes, zweites Rohrelement vorgesehen ist. An den Anschlussbereichen 20, 30 sind die Rohrelemente vorzugsweise angeschweißt. Zum Herstellen der Rohrverbindung ist der Stecker 3 in die Muffe 2 einschiebbar.

Ausgehend in axialer Richtung von der Spitze des Steckers 3 weist dieser einen ersten zylindrischen Bereich 34 auf, in dem eine Dichtungsringnut 35 zur Aufnahme einer ersten Ringdichtung 71 vorgesehen ist. In axialer Richtung schließt sich an den ersten zylindrischen Bereich 34 eine Keilwellenverzahnung 32 mit einer Vielzahl von Axialstegen und Axialnuten an, welche den Verbindungsbereich für die drehfeste Verbindung bildet. Im Bereich der Axialstege ist der Stecker 3 außendurchmessergrößer als im ersten zylindrischen Bereich 34 ausgebildet.

In axialer Richtung schließt sich an die Keilwellenverzahnung 32 weiter ein zweiter zylindrischer Bereich 36 an, in dem eine zweite Dichtungsringnut 37 zur Aufnahme einer zweiten Ringdichtung 72 vorgesehen ist. Der Außendurchmesser des Steckers 3 im zweiten zylindrischen Bereich 36 entspricht etwa dem Au-βendurchmesser des Steckers 3 im Bereich der Stege der Keilwellenverzahnung 32. Entsprechend ist die zweite Ringdichtung 72 durchmessergrößer als die erste Ringdichtung 71 ausgebildet.

Axial schließt sich an den zweiten zylindrischen Bereich 36 eine Ringnut 38 an, die zur axialen Lagesicherung der Rohrkupplung dient. An diese Ringnut 38 schließt sich ein dritter zylindrischer Bereich 39 an, an dem ein ringförmiger Anschlag 40 vorgesehen ist. Im Bereich des dritten zylindrischen Bereiches 39 ist der Anschlussbereich 30 des zweiten Rohrelementes vorgesehen.

Die Muffe 2 ist an ihrer Innenwand korrespondierend zur Außenwand des Steckers 3 ausgebildet. Ausgehend von einer Einstecköffnung 21 für den Stecker 3 ist an der Innenwand der Muffe 2 zunächst eine weitere Ringnut 28 vorgesehen, welche der Ringnut 38 des Steckers 3 bei vollständig, d.h. bis zum Anschlag 40 eingeschobenem Stecker 3 gegenüberliegt. Entlang der Ringnut 28 sind gleichmäßig mehrere etwa rechteckige Einführöffnungen 8, 8 ' in der zylindrischen Außenwand der Muffe 2 vorgesehen, die einen Zugriff auf die Ringnut 28 von außen erlauben. Durch diese können von außen Sperrelemente 60 in die Ringnut 28 sowie die korrespondierende Ringnut 38 eingesetzt werden, durch welche der Stecker 3 in der Muffe 2 axial gesichert wird.

Ausgehend von der Einstecköffnung 21 folgt in axialer Richtung auf die Ringnut 28 eine innere Keilwellenverzahnung 22, die mit der Keilwellenverzahnung 32 des Steckers 3 korrespondiert.

Zur besonders einfachen Fertigung der Keilwellenverzahnung 22 ist die Muffe zweiteilig mit einem ersten Hülsenelement 41, in dem die Keilwellenverzahnung 22 vorgesehen ist, und einem zweiten Hülsenelement 42 ausgebildet. Das innendurchmesserkleinere Hülsenelement 42 schließt stirnseitig an die Keilwellenverzahnung 22 an und ist mit dem ersten Hülsenelement 41 beispielsweise stoffschlüssig verbunden.

Zur besonders guten axialen Sicherung sind gemäß dem dargestellten Ausführungsbeispiel Sperrelementepaare mit jeweils zwei einzelnen Sperrelementen 60, 60' vorgesehen, die unter entgegengesetztem Drehsinn beiderseits der Einführöffnungen 8, 8' in die beiden Ringnuten 28, 38 eingeschoben werden. Zum Sichern der einzelnen Sperrelemente 60, 60' in den Ringnuten 28, 38 sind Sicherungsbolzen 61 vorgesehen, die in korrespondierende Radialbohrungen 9 in der Ringnut 38 des Steckers 3 eingebracht werden können. Diese Radialbohrungen 9 sind unter gleichem Abstand entlang des Umfangs der Ringnut 38 verteilt. An den Sicherungsbolzen 61 sind Haltemuffen 62 aus Kunststoff angeordnet, mit denen die Sperrelemente 60 kraft- und/oder formschlüssig festlegbar sind. Neben der Verwendung von Sicherungsbolzen 61 und Radialbohrungen 9 sind jedoch grundsätzlich auch andere Sicherungskonzepte denkbar.

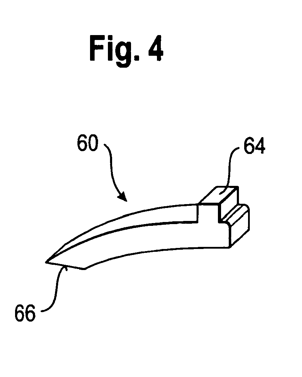

Ausführungsdetails der Sperrelemente 60 gehen insbesondere aus Fig. 4 hervor. Die Sperrelemente 60 sind ringsegmentartig ausgebildet und weisen nahe ihrer einen Stirnseite einen Anschlag 64 auf, der radial nach außen vorsteht. Durch diesen Anschlag, der an der die Einführöffnung 8, 8' umgebenden Wandung anschlägt, kann verhindert werden, dass das jeweilige Sperrelement 60 zu weit in die beiden Ringnuten 28, 38 hineinrutscht. An der gegenüberliegenden Stirnseite weisen die Sperrelemente 60 eine radial nach innen, das heißt zum Stecker 3 hin gerichtete Abschrägung 66 auf. Diese Abschrägung 66 erlaubt es, das jeweilige Sperrelement 60 beim Einführen in die Ringnut 38 des Steckers 3 anzustellen, wodurch der Einführvorgang erleichtert wird.

## Patentansprüche

1. Rohrkupplung für Rohrelemente mit
- einer Muffe (2) mit einem Anschlussbereich (20) für ein erstes Rohrelement,
- einem in die Muffe (2) axial einschiebbaren Stecker (3) mit einem Anschlussbereich (30) für ein zweites Rohrelement,
- einem Verbindungsbereich für eine drehfeste Verbindung mit mindestens einem an der Muffe (2) und/oder dem Stecker (3) angeordneten Axialsteg und mindestens einer an dem Stecker (3) beziehungsweise der Muffe (2) angeordneten korrespondierenden Axialnut,
- einem Sicherungsbereich zur axialen Lagesicherung mit einer an der Muffe ausgebildeten ersten Ringnut (28) und einer korrespondierenden zweiten Ringnut (38), die an dem Stecker (3) ausgebildet ist, wobei mindestens ein Sperrelement (60) zum Herstellen einer Formschlussverbindung zwischen der Muffe (2) und dem Stecker (3) über zumindest eine Einführöffnung (8) in der Muffe (2) in die beiden Ringnuten (28, 38) einführbar ist, **gekennzeichnet durch** eine Vielzahl von gleichmäßig zueinander beabstandeten Radialbohrungen (9) in der Ringnut (38) des Steckers (3) zur Aufnahme eines Sicherungsbolzens (61) zur Lagesicherung des Sperrelementes (60).

2. Rohrkupplung nach Anspruch 1,
**dadurch gekennzeichnet ,**
**dass** der Verbindungsbereich für die drehfeste Verbindung an der Muffe (2) zwischen dem Sicherungsbereich zur axialen Lagesicherung und dem Anschlussbereich (20) für das Rohrelement angeordnet ist.

3. Rohrkupplung nach einem der Ansprüche 1 oder 2,
**dadurch gekennzeichnet ,**
**dass** zumindest eine Ringdichtung (72) axial zwischen dem Sicherungsbereich und dem Verbindungsbereich angeordnet ist und/oder
**dass** zumindest eine weitere Ringdichtung (71) auf der dem Sicherungsbereich axial abgewandten Seite des Verbindungsbereichs angeordnet ist.

4. Rohrkupplung nach einem der Ansprüche 1 bis 3,
**dadurch gekennzeichnet ,**
**dass** das Sperrelement (60) als gebogener, etwa quaderförmiger Keil ausgebildet ist.

5. Rohrkupplung nach Anspruch 4,
**dadurch gekennzeichnet ,**
**dass** das Sperrelement (60) einen radial nach außen vorstehenden Anschlag (64) aufweist.

6. Rohrkupplung nach einem der Ansprüche 1 bis 5,
**dadurch gekennzeichnet ,**
**dass** das Sperrelement (60) stirnseitig eine zum Stecker gerichtete Abschrägung aufweist (66).

7. Rohrkupplung nach einem der Ansprüche 1 bis 6,
**dadurch gekennzeichnet ,**
**dass** die Muffe (2) ein erstes Hülsenelement (41) aufweist, an dem der Verbindungsbereich ausgebildet ist, sowie ein stirnseitig hieran angeordnetes zweites Hülsenelement (42), an dem der Anschlussbereich (20) für das erste Rohrelement vorgesehen ist.

## Claims

1. Tube coupling for tube elements comprising
- a socket (2) having a connecting portion (20) for a first tube element,
- a plug (3) which can be inserted axially into the socket (2) and has a connecting portion (30) for a second tube element,
- a joining portion for a torque proof junction comprising at least one axial rib arranged on the socket (2) and/or the plug (3) and at least one corresponding axial groove arranged on the plug (3) or the socket (2),
- a securing portion for securing the axial position having a first annular groove (28) formed on the socket and a corresponding second annular groove (38) formed on the plug (3), wherein at least one locking element (60) can be inserted into the two annular grooves (28, 38) via at least one insertion opening (8) in the socket (2) in order to produce a form-locking connection between the socket (2) and the plug (3),
**characterized by**
a plurality of evenly spaced radial bores (9) located in the annular groove (38) of the plug (3) for accommodating a securing bolt (61) in order to secure the position of the locking element (60).

2. Tube coupling according to claim 1,
**characterized in that**
the joining portion for the torque proof junction is arranged on the socket (2) between the securing portion for securing the axial position and the connecting portion (20) for the tube element.

3. Tube coupling according to any one of claims 1 or 2,
**characterized in that**
at least one annular sealing (72) is arranged axially between the securing portion and the joining portion and/or
**in that** at least one further annular sealing (71) is arranged on the side of the joining portion that faces away axially from the securing portion.

4. Tube coupling according to any one of claims 1 to 3,
**characterized in that**
the locking element (60) is designed as a curved, approximately cuboid wedge.

5. Tube coupling according to claim 4,
**characterized in that**
the locking element (60) has a stop (64) that projects radially outwards.

6. Tube coupling according to any one of claims 1 to 5,
**characterized in that**
at its front face the locking element (60) has a bevel (66) directed towards the plug.

7. Tube coupling according to any one of claims 1 to 6,
**characterized in that**
the socket (2) has a first sleeve element (41), on which the joining portion is formed and, arranged at the front face thereof, a second sleeve element (42), on which the connecting portion (20) for the first tube element is provided.

## Revendications

1. Raccord de tuyau pour éléments de tuyau, avec
- un manchon (2) présentant une zone de raccordement (20) pour un premier élément de tuyau,
- une fiche (3) pouvant être enfoncée axialement dans le manchon (2) avec une zone de raccordement (30) pour un deuxième élément de tuyau,
- une zone de jonction pour une liaison solidaire en rotation avec au moins une barre axiale placée sur le manchon (2) et/ou la fiche (3), et au moins une rainure axiale correspondante placée respectivement sur la fiche (3) ou sur le manchon (2),
- une zone d'immobilisation pour l'immobilisation axiale avec une première rainure annulaire (28) formée sur le manchon et une deuxième rainure annulaire correspondante (38) qui est formée sur la fiche (3), au moins un élément de blocage (60) pouvant être introduit dans les deux rainures annulaires (28, 38) afin d'établir une liaison par engagement positif entre le manchon (2) et la fiche (3) par l'intermédiaire d'au moins une ouverture d'introduction (8) dans le manchon (2),
***caractérisé par*** une pluralité de perçages radiaux (9) espacés régulièrement les uns des autres dans la rainure annulaire (38) de la fiche (3) pour recevoir un goujon d'immobilisation (61) en vue de l'immobilisation de l'élément de blocage (60).

2. Raccord de tuyau selon la revendication 1, ***caractérisé en ce que*** la zone de jonction pour la liaison solidaire en rotation est placée sur le manchon (2) entre la zone d'immobilisation pour l'immobilisation axiale et la zone de raccordement (20) pour l'élément de tuyau.

3. Raccord de tuyau selon l'une quelconque des revendications 1 ou 2, ***caractérisé***
***en ce qu'****au* moins un joint annulaire (72) est placé axialement entre la zone d'immobilisation et la zone de jonction, et/ou
***en ce qu**'au* moins un autre joint annulaire (71) est placé du côté de la zone de jonction opposé axialement à la zone d'immobilisation.

4. Raccord de tuyau selon l'une quelconque des revendications 1 à 3, ***caractérisé en ce que*** l'élément de blocage (60) est réalisé sous la forme d'une cale incurvée approximativement parallelepipédique.

5. Raccord de tuyau selon la revendication 4, ***caractérisé en ce que*** l'élément de blocage (60) comprend une butée (64) formant saillie radialement vers l'extérieur.

6. Raccord de tuyau selon l'une quelconque des revendications 1 à 5, ***caractérisé en ce que*** l'élément de blocage (60) présente frontalement un biseau (66) dirigé vers la fiche.

7. Raccord de tuyau selon l'une quelconque des revendications 1 à 6, ***caractérisé en ce que*** le manchon (2) présente un premier élément de douille (41) sur lequel est formée la zone de jonction, ainsi qu'un deuxième élément de douille (42) placé frontalement à la suite et sur lequel est prévue la zone de raccordement (20) pour le premier élément de tuyau.
